# EUROPEAN PATENT APPLICATION

(11) **EP 4 850 978 A1**
(43) Date of publication of application: **09.12.2026**
(21) Application number: 26182234.0
(22) Date of filing: 01.06.2026
(51) Int. Cl.: B60N 2/06, B60N 2/02, B60N 2/07

(54) **LONG RAIL APPARATUS FOR VEHICLE SEAT**

(30) Priority: 02.06.2025 KR 20250072259
(71) Applicant: Hyundai Transys Inc., Chungcheongnam-do 31930 (KR)
(72) Inventor: KIM, Cheon, 18463 Hwaseong-si, Gyeonggi-do (KR)
(74) Representative: Viering, Jentschura & Partner mbB Patent- und Rechtsanwälte

(57) **Abstract**

A long rail apparatus for a vehicle seat includes a first support device configured to support belts disposed forward of lower rails in a longitudinal direction and connected to upper rails, a second support device configured to be identical to the first support device and configured to support belts disposed rearward of the lower rails in the longitudinal direction and connected to the upper rails, and a motor configured to pull the belts disposed adjacent to the first support device to enable the upper rails positioned between the first support device and the second support device to move along the lower rails.

## Description

### CROSS-REFERENCE TO RELATED APPLICATIONS

This application claims priority to and the benefit of Korean Patent Application No. 10-2025-0072259 filed in the Korean Intellectual Property Office on June 2, 2025, the entire contents of which are incorporated herein by reference.

### TECHNICAL FIELD

The present invention relates to a long rail apparatus for a vehicle seat, the long rail apparatus being configured to move a vehicle seat.

### BACKGROUND

Recently, a multipurpose vehicle seat, which has a long stroke and is able to rotate 360 degrees, has been actively developed in order to prepare for a future autonomous driving era.

In order to implement the multipurpose vehicle seat, a vehicle seat having a long rail structure capable of implementing a long stroke may be applied instead of applying a general rail, which implements a short stroke, as a seat rail.

The long rail structures may be classified into a rack-and-pinion type long rail structure and a lead screw type long rail structure. In the long rail structure, a separate foreign substance inflow prevention device is provided above a lower rail in order to prevent foreign substances from being introduced into a gearbox.

However, because the long rail structure requires a large number of components, such as gears, an assembly process is complicated, a large amount of assembly time is required, and the separate foreign substance inflow prevention device is required, which inevitably increases manufacturing costs.

### [Document of Related Art]

### [Patent Document]

(Patent Document 1) Patent Application Laid-Open No. 10-2023-0080871 (published on June 7, 2023)

### SUMMARY

The present invention has been made in an effort to solve the above-mentioned problem, and an object of the present invention is to provide a long rail apparatus for a vehicle seat, in which a belt may cover an upper side of a lower rail, thereby preventing foreign substances from being introduced into the lower rail and minimizing the number of components.

In order to achieve the above-mentioned object, the present invention provides a long rail apparatus for a vehicle seat. The long rail apparatus may include: a first support device configured to support belts coupled to upper rails at a position forward of lower rails in a longitudinal direction; a second support device structurally identical to the first support device and configured to support belts coupled to the upper rails at a position rearward of the lower rails in the longitudinal direction; and a motor configured to pull the belts disposed adjacent to the first support device to enable the upper rails positioned between the first support device and the second support device to move along the lower rails.

In addition, the lower rails may include a first lower rail and a second lower rail positioned opposite to each other. Each of the first and second support devices may each include: a support frame having a first end and a second end positioned opposite to each other, the first end being coupled to the first lower rail, the second end being coupled to the second lower rail; first and second support plates disposed at the first end of the support frame; a third support plate and a fourth support plate disposed at the second end of the support frame; and a first pulley and a second pulley, the first pulley being rotatable between the first and second support plates, the second pulley being rotatable between the third support plate and the fourth support plate, the first pulley and the second pulley being configured to wind or unwind the belts coupled to an outer diameter portions of the first and second pulleys, each of the first pulley and the second pulley having one end elastically supported by a first elastic member.

In addition, the first support plate of the first support device may be disposed opposite to the second support plate of the first support device and directed toward the motor. The third support plate of the first support device may be disposed opposite to the fourth support plate of the first support device and directed toward the motor.

In addition, the long rail apparatus may include a serration bar coupled to the motor. Two opposite ends of the serration bar may penetrate the first and third support plates of the first support device, respectively, and be inserted into serration holes of the first and second pulleys, respectively.

In addition, the motor may be surrounded by a first cover, and the first cover may be coupled to the support frame of the first support device by a coupling member.

In addition, a catching portion may be disposed on one of the first cover and the support frame of the first support device, and a coupling groove, to which the catching portion is coupled, may be provided/defined in the other of the first cover and the support frame of the first support device.

In addition, a second cover may be coupled to each of the first pulley and the second pulley. Protruding portions may be disposed around one end of each of the first and second pulleys, insertion grooves may be defined between the protruding portions, and insertion protrusions disposed inside the second cover may be coupled to the insertion grooves.

In addition, the second cover may include a center shaft penetrating the second cover and positioned inside the second cover. The first elastic member may include: a first hook portion disposed at one end of the first elastic member and fitted with a fitting groove defined at one end of the center shaft; and a second hook portion disposed at another end of the first elastic member and caught by one of the protruding portions.

In addition, the one end of the center shaft may be inserted into an insertion hole defined in an accommodation portion positioned inside the protruding portions of each of the first pulley and the second pulley, and another end of the center shaft may penetrate the second cover and be coupled to each of the second support plate and the fourth support plate.

In addition, one surface of the first elastic member may be disposed in the accommodation portion, and another surface of the first elastic member may be disposed inside the insertion protrusions of the second cover.

In addition, bushings may be coupled to the first, second, third, and fourth support plates.

In addition, a support portion may be disposed on each of the lower rails. An upper surface of each of the belts may be supported inside each of the lower rails by the support portion.

In addition, one end of each of the belts may be connected to each of the first pulley and the second pulley, and another end of each of the belts may be inserted into an assembly groove of each of the upper rails, the another end being coupled to each of the upper rails in a state in which a second elastic member is coupled to the another end.

In addition, the assembly groove may include: a first assembly groove configured to receive the another end of each of the belts; a second assembly groove connected to the first assembly groove and being larger than the first assembly groove; and a third assembly groove connected to the second assembly groove and being smaller than the second assembly groove.

In addition, the second elastic member may be coupled to the another end of each of the belts, elastic portions may be disposed at two opposite ends of the second elastic member, the elastic portions may be configured to move along the first assembly groove in a state in which the elastic portions are folded toward the each of the belts, and when the elastic portions are inserted into the second assembly groove, the elastic portions may be configured to be caught by the second assembly groove while being unfolded upward and downward, respectively, in the second assembly groove.

In addition, the first elastic member may be a spiral spring.

According to the present invention, the belt may cover the upper side of the lower rail, thereby preventing foreign substances from being introduced into the lower rail.

In addition, the present invention may prevent the introduction of foreign substances, thereby providing improved operational sensitivity during the process of moving the vehicle seat.

In addition, the present invention may improve assembly quality by minimizing the number of components.

In addition, the present invention may shorten assembly time by minimizing the number of components, thereby reducing manufacturing costs and thus ensuring product competitiveness.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a view illustrating an entire configuration of a long rail apparatus for a vehicle seat according to an exemplary embodiment of the present invention.
FIG. 2 is a view illustrating a state according to the exemplary embodiment of the present invention in which a motor is mounted on a support frame coupled to a lower rail, and the motor is surrounded by a first cover.
FIG. 3 is a view illustrating a state according to the exemplary embodiment of the present invention in which a belt is coupled to a pulley of a first support device.
FIG. 4 is a view illustrating a state according to the exemplary embodiment of the present invention in which a serration bar is coupled to a serration hole of the pulley.
FIG. 5 is a view illustrating a state according to the exemplary embodiment of the present invention in which a second cover is coupled to the pulley.
FIG. 6 is a view illustrating a state according to the exemplary embodiment of the present invention in which the pulley and the cover are separated.
FIG. 7 is a view illustrating a state according to the exemplary embodiment of the present invention in which a bushing is coupled to first and second support plates.
FIG. 8 is a view illustrating a state according to the exemplary embodiment of the present invention in which a catching portion of the first cover is coupled to a coupling groove of the support frame.
FIG. 9 is a view illustrating a state according to the exemplary embodiment of the present invention in which the support frame and the lower rail are assembled by coupling members.
FIG. 10 is a view illustrating a state according to the exemplary embodiment of the present invention in which the belt of the first support device is connected to one end of an upper rail.
FIG. 11 is a view illustrating a locked state of the upper rail according to the exemplary embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Hereinafter, exemplary embodiments of the present invention will be described in detail with reference to the accompanying drawings. First, in assigning reference numerals to constituent elements of the respective drawings, it should be noted that the same constituent elements will be designated by the same reference numerals, if possible, even though the constituent elements are illustrated in different drawings. In addition, in the description of the present invention, the specific descriptions of publicly known related configurations or functions will be omitted when it is determined that the specific descriptions may obscure the subject matter of the present invention. Further, the exemplary embodiments of the present invention will be described below, but the technical spirit of the present invention is not limited thereto and may, of course, be modified and variously carried out by those skilled in the art.

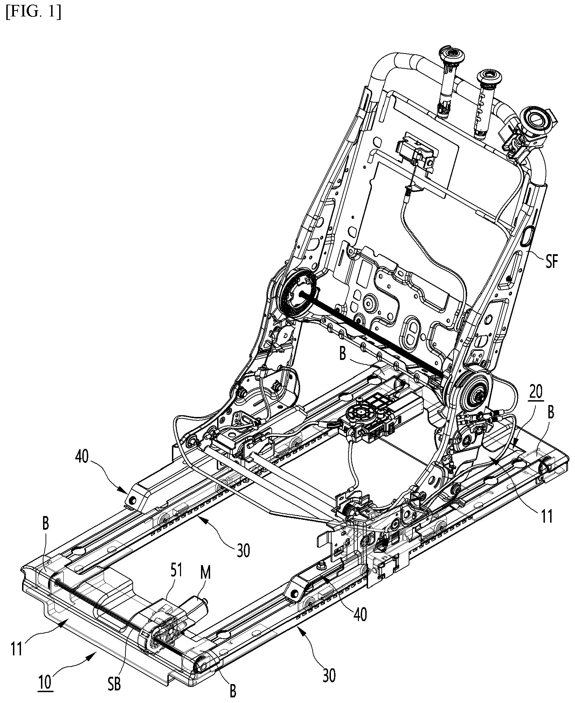

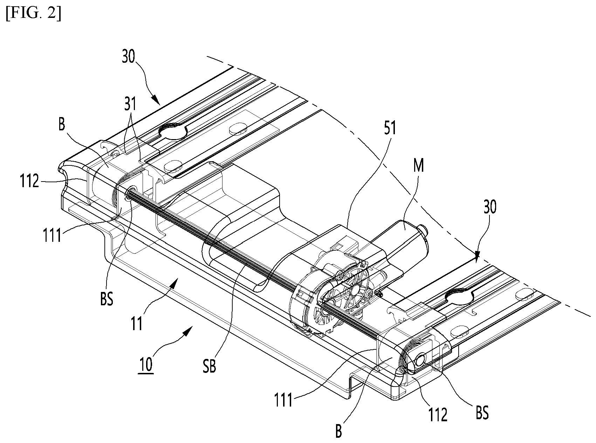

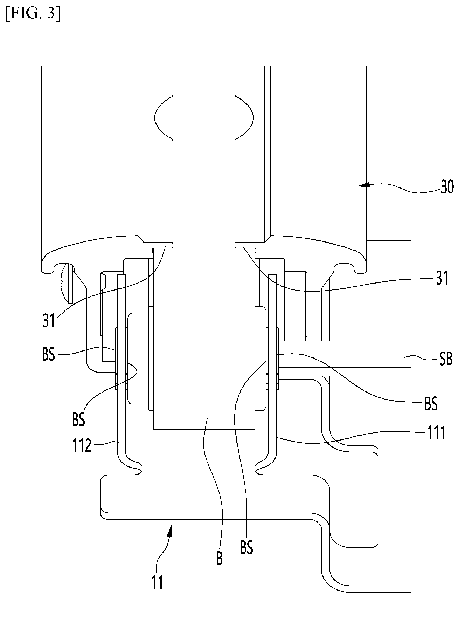

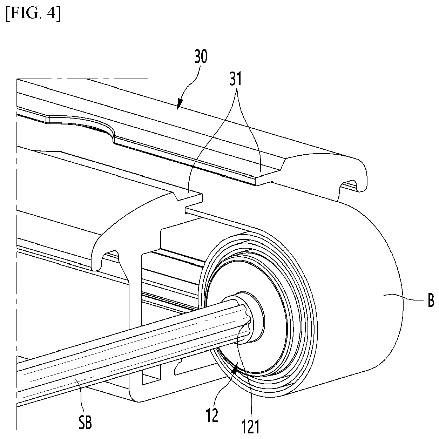

FIG. 1 is a view illustrating an entire configuration of a long rail apparatus for a vehicle seat according to an exemplary embodiment of the present invention. FIG. 2 is a view illustrating a state according to the exemplary embodiment of the present invention in which a motor is mounted on a support frame coupled to a lower rail, and the motor is surrounded by a first cover. FIG. 3 is a view illustrating a state according to the exemplary embodiment of the present invention in which a belt is coupled to a pulley of a first support device. FIG. 4 is a view illustrating a state according to the exemplary embodiment of the present invention in which a serration bar is coupled to a serration hole of the pulley.

As illustrated in FIGS. 1 to 4, a long rail apparatus for a vehicle seat according to the present invention may include a first support device 10 provided forward of lower rails 30, a second support device 20 provided rearward of the lower rails 30 while being opposite to the first support device 10, and a motor M provided on the first support device 10.

The first support device 10 may support belts B disposed forward of the lower rails 30 in a longitudinal direction and connected to ends of upper rails 40.

The second support device 20 may be configured to be identical to the first support device 10. The second support device 20 may support belts B disposed rearward of the lower rails 30 in the longitudinal direction and connected to the other ends of the upper rails 40.

The belt B connected to one end of the upper rail 40 connected to the first support device 10 may be pulled toward the first support device 10 by power of the motor M. When the belt B connected to one end of the upper rail 40 is pulled toward the first support device 10, the upper rail 40, together with the belt B, may also move toward the first support device 10.

The upper rail 40 may move along the lower rail 30 in a state in which the upper rail 40 is inserted into the lower rail 30. The lower rail 30 may be mounted on a floor panel in a vehicle interior. The upper rail 40 may be connected to a seat frame SF. The upper rails 40 may be positioned between the first support device 10 and the second support device 20.

The first and second support devices 10 and 20 may include support frames 11, first and second support plates 111 and 112, and pulleys 12.

Two left and right opposite ends of the support frame 11 may be connected to the lower rails 30 provided at two left and right opposite sides.

The first and second support plates 111 and 112 may be provided at two left and right opposite ends of the support frame 11.

The pulley 12 may pull the belt B in a rotation direction while rotating by receiving power from the motor M. As a result, the upper rail 40 connected to the belt B may move.

One end of the pulley 12 may be elastically supported by a first elastic member 81. For example, the first elastic member 81 may be a spiral spring.

Because an elastic force of the first elastic member 81 is applied to the pulley 12, tension of the belt B connected to the pulley 12 may be maintained.

The first elastic member 81 of the first support device 10 and the first elastic member 81 of the second support device 20 are compressed and stretched in opposite directions, such that tension of the belt B may be maintained.

For example, the first elastic member 81 of the second support device 20 may be stretched when the first elastic member 81 of the first support device 10 is compressed. On the contrary, the first elastic member 81 of the second support device 20 may be compressed when the first elastic member 81 of the first support device 10 is stretched. Therefore, the elastic forces of the first elastic members 81 are applied to the pulley 12 of the first support device 10 and the pulley 12 of the second support device, such that tension of the belt B of the first support device 10 and tension of the belt B of the second support device 20 may be maintained.

The motor M may be mounted on the support frame 11 of the first support device 10. The motor M may be connected to a serration bar SB.

The motor M may be surrounded by a first cover 51. The first cover 51 may not only block noise of the motor M, but also surround and protect the motor M while the motor M operates.

Two opposite ends of the serration bar SB may penetrate first support plates 111 of the support frame 11 and be inserted into serration holes 121 of the pulleys 12.

The serration bar SB and the pulleys 12 may be securely assembled by the serration coupling structures of the serration bar SB and the pulleys 12.

The second support device 20 may be configured to be identical to the first support device 10, except for the motor M, the serration bar SB, and the first cover 51.

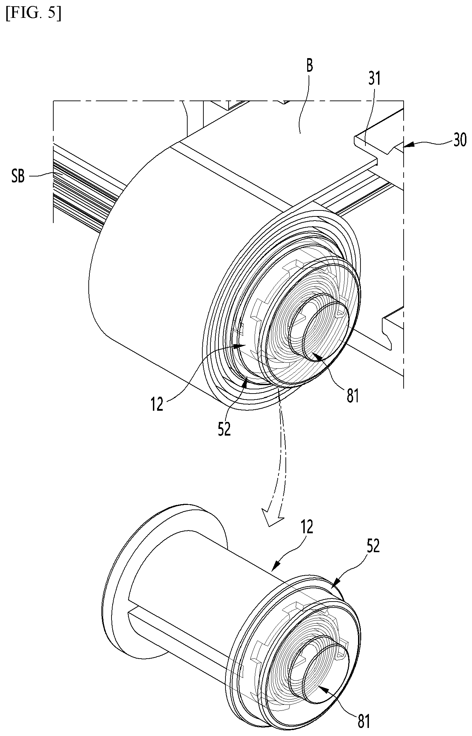

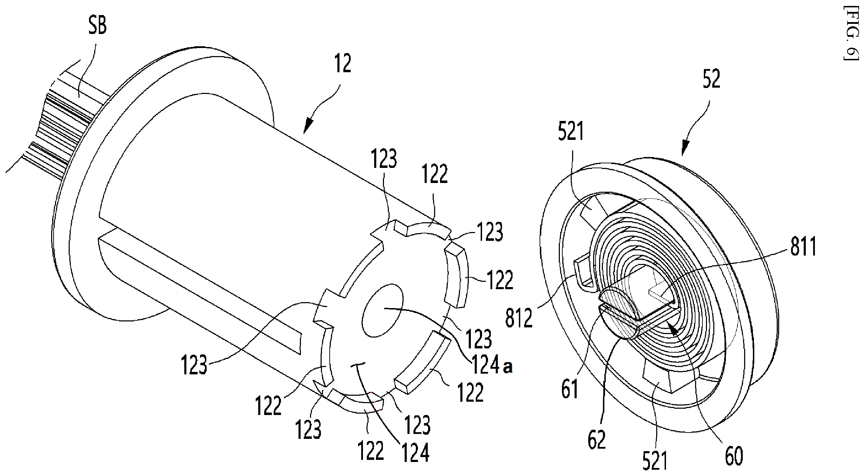

FIG. 5 is a view illustrating a state according to the exemplary embodiment of the present invention in which a second cover is coupled to the pulley. FIG. 6 is a view illustrating a state according to the exemplary embodiment of the present invention in which the pulley and the cover are separated.

As illustrated in FIGS. 5 and 6, a second cover 52 may be coupled to one side of the pulley 12.

Protruding portions 122 may be provided around one end of the pulley 12. The protruding portions 122 may be arranged in a circular shape at predetermined intervals.

Insertion grooves 123 may be formed between the protruding portions 122 by the protruding portions 122. Insertion protrusions 521 may be provided inside the second cover 52. The insertion protrusions 521 may be arranged in a circular shape. The insertion protrusions 521 of the second cover 52 may be coupled to the insertion grooves 123 of the pulley 12.

The first elastic member 81 may be assembled to be positioned between the pulley 12 and the second cover 52. One surface of the first elastic member 81 may be inserted into an accommodation portion 124 of the pulley 12. The other surface of the first elastic member 81 may be inserted inside the insertion protrusions 521 of the second cover 52.

Because the protruding portions 122 are arranged in a circular shape at one end of the pulley 12, the accommodation portion 124 may be formed inside the protruding portions 122.

The first elastic member 81 may include a first hook portion 811 provided at one end of the first elastic member 81, and a second hook portion 812 provided at the other end of the first elastic member 81.

One end 62 of a center shaft 60 may penetrate the second cover 52 and be positioned inside the second cover 52, and the other end 63 of the center shaft 60 may penetrate the second cover 52 and be connected to a second support plate 112.

The first hook portion 811 may be fitted with a fitting groove 61 provided at one end 62 of the center shaft 60. The second hook portion 812 may be assembled to be caught by the corresponding protruding portion 122 of the pulley 12.

Inside the second cover 52, one end 62 of the center shaft 60 may be inserted into an insertion hole 124a provided at a center of the accommodation portion 124 of the pulley 12.

The second cover 52, together with the pulley 12, may rotate about the center shaft 60 in the state in which the second cover 52 is coupled to the pulley 12.

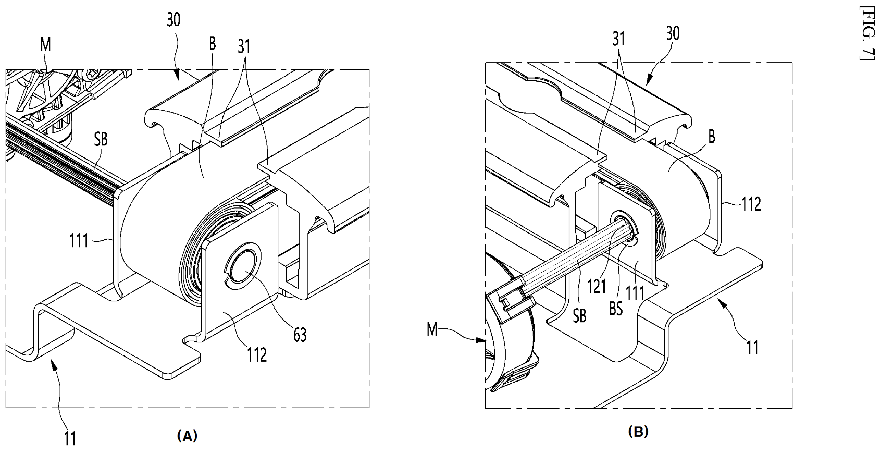

FIG. 7 is a view illustrating a state according to the exemplary embodiment of the present invention in which a bushing is coupled to the first and second support plates.

As illustrated in FIGS. 7A and 7B, in the state in which the pulley 12 and the second cover 52 are inserted between the first support plate 111 and the second support plate 112, the pulley 12 and the second cover 52 may be rotatably supported by bushings BS coupled to the first support plate 111 and the second support plate 112. For example, the bushing BS may be a metal bushing BS.

Inside the lower rail 30, an upper surface of the belt B connected to the pulley 12 may be supported by support portions 31 provided on the lower rail 30.

Because an upper side of the lower rail 30 is completely covered by the support portions 31 and the belt B, foreign substances cannot be introduced into the lower rail 30.

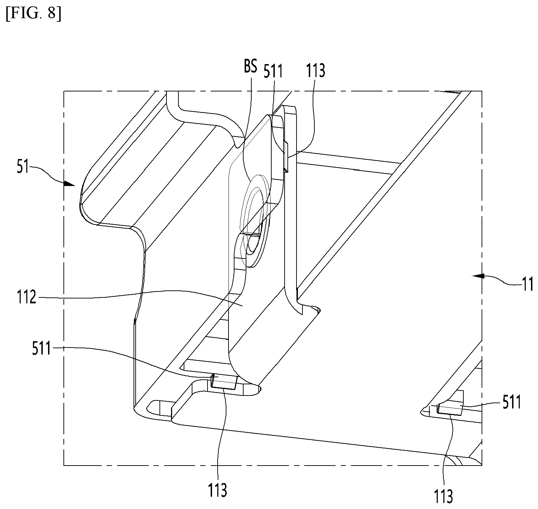

FIG. 8 is a view illustrating a state according to the exemplary embodiment of the present invention in which a catching portion of the first cover is coupled to a coupling groove of the support frame.

As illustrated in FIG. 8, a catching portion 511 may be provided on one of the first cover 51 and the support frame 11 of the first support device 10, and a coupling groove 113 may be provided in the other of the first cover 51 and the support frame 11 of the first support device 10.

For example, the catching portion 511 provided on the first cover 51 may be coupled to the coupling groove 113 provided in the support frame 11 of the first support device 10.

With the structure in which the catching portion 511 is coupled to the coupling groove 113, the first cover 51 may be easily assembled to the support frame 11 of the first support device 10.

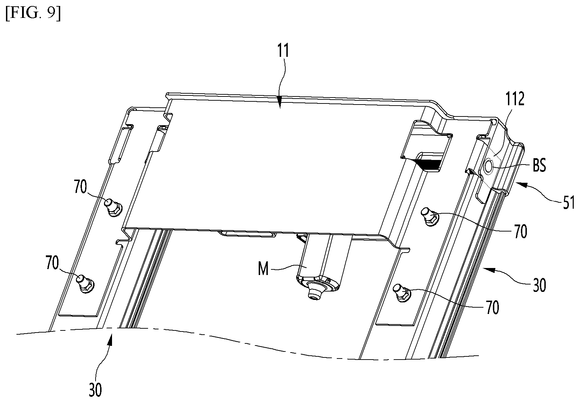

FIG. 9 is a view illustrating a state according to the exemplary embodiment of the present invention in which the support frame and the lower rail are assembled by coupling members.

As illustrated in FIG. 9, the support frame 11 may be securely coupled to the lower rails 30 by coupling members 70, such as bolts.

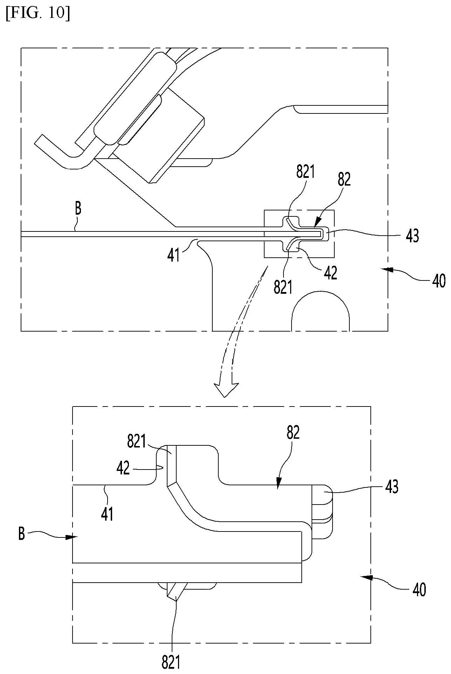

FIG. 10 is a view illustrating a state according to the exemplary embodiment of the present invention in which the belt of the first support device is connected to one end of the upper rail.

As illustrated in FIG. 10, one end of the belt B of the first support device 10 may be connected to the pulley 12, and the other end of the belt B of the first support device 10 may be connected to the upper rail 40 by being inserted into an assembly groove provided at one end of the upper rail 40.

A second elastic member 82 may be coupled to the other end of the belt B. Elastic portions 821 having elasticity may be provided at two opposite ends of the second elastic member 82.

An assembly groove of the upper rail 40 may include a first assembly groove 41, a second assembly groove 42 connected to the first assembly groove 41, and a third assembly groove 43 connected to the second assembly groove 42.

The other end of the belt B may be inserted through the first assembly groove 41. The elastic portions 821 of the second elastic member 82 may move toward the second assembly groove 42 along the first assembly groove 41 in a state in which the elastic portions 821 are folded toward the belt B during the process in which the elastic portions 821 move along the first assembly groove 41 so that the elastic portions 821 may move along the first assembly groove 41.

The second assembly groove 42 may be connected to the first assembly groove 41. The second assembly groove 42 may be configured as a groove larger than the first assembly groove 41. The elastic portions 821 of the second elastic member 82 may be unfolded upward and downward in the second assembly groove 42 while being inserted into the second assembly groove 42 from the first assembly groove 41.

The elastic portions 821 of the second elastic member 82 may be caught by the second assembly groove 42 when the elastic portions 821 are unfolded upward and downward in the second assembly groove 42. When the elastic portions 821 of the second elastic member 82 are caught by the second assembly groove 42, a movement of the other end of the belt B from the second assembly groove 42 to the first assembly groove 41 may be restricted.

The third assembly groove 43 may be connected to the second assembly groove 42. The third assembly groove 43 may be configured as a groove smaller than the second assembly groove 42. An end of the other end of the belt B may be inserted into the third assembly groove 43.

The structure in which the upper rail 40 and the belt B are assembled may be equally applied to the first support device 10 and the second support device 20.

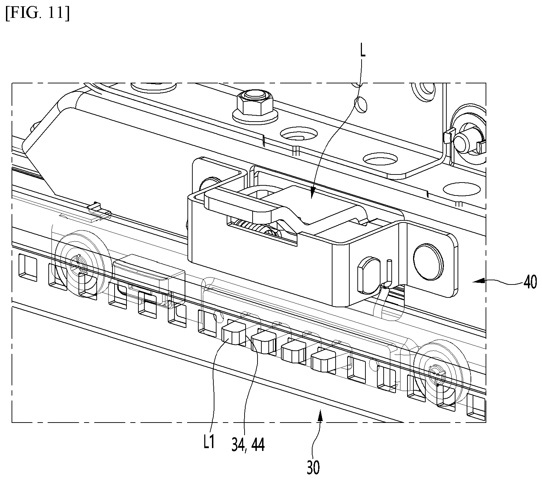

FIG. 11 is a view illustrating a locked state of the upper rail according to the exemplary embodiment of the present invention.

As illustrated in FIG. 11, when a force is applied to a locking device L that is a publicly-known component, locking protrusions L1 of the locking device L may be inserted into locking holes 34 and 44 of the upper and lower rails 40 and 30, such that a locked state may be implemented. The locking device L may be implemented by various publicly-known components.

In the locked state, a movement of the upper rail 40 along the lower rail 30 may be restricted. In an unlocked state, the upper rail 40 may move along the lower rail 30.

Next, an operation of the present invention will be described.

As illustrated in FIGS. 1 and 2, when electric power is applied to the motor M, power of the motor M may be transmitted to the serration bar SB, such that the serration bar SB may rotate forward.

When the serration bar SB rotates forward, the pulley 12 of the first support device 10 connected to the serration bar SB may rotate forward.

When the pulley 12 of the first support device 10 rotates forward, the belt B connected to the pulley 12 of the first support device 10 may be pulled toward the first support device 10 while being wound around the pulley 12 of the first support device 10. As a result, the upper rail 40 may move forward along the lower rail 30.

When the upper rail 40 moves forward along the lower rail 30, the seat frame SF connected to the upper rail 40 may move forward together with the upper rail 40.

In case that the motor M rotates reversely or power of the motor M is not transmitted to the serration bar SB, the first elastic member 81, which has been compressed, is stretched, and an elastic force of the first elastic member 81 is applied to the pulley 12 of the first support device 10, such that the pulley 12 of the first support device 10 may rotate reversely.

When the pulley 12 of the first support device 10 rotates reversely, the belt B wound around the pulley 12 of the first support device 10 may be unwound. When the pulley 12 of the first support device 10 is unwound, the upper rail 40 may move along the lower rail 30 toward the second support device 20 provided at the rear side.

The first elastic member 81 of the second support device 20 may be stretched when the first elastic member 81 of the first support device 10 is compressed. On the contrary, the first elastic member 81 of the second support device 20 may be compressed when the first elastic member 81 of the first support device 10 is stretched. Therefore, the elastic forces of the first elastic members 81 are applied to the pulley 12 of the first support device 10 and the pulley 12 of the second support device, such that tension of the belt B of the first support device 10 and tension of the belt B of the second support device 20 may always be maintained during the process in which the upper rail 40 moves forward or rearward.

The above description is simply given for illustratively describing the technical spirit of the present invention, and those skilled in the art to which the present invention pertains will appreciate that various modifications, changes, and substitutions are possible without departing from the essential characteristics of the present invention. Accordingly, the embodiments disclosed in the present invention and the accompanying drawings are intended not to limit but to describe the technical spirit of the present invention, and the scope of the technical spirit of the present invention is not limited by the embodiments and the accompanying drawings. The protective scope of the present invention should be construed based on the following claims, and all the technical spirit in the equivalent scope thereto should be construed as falling within the scope of the present invention.

As described above, the exemplary embodiments have been described and illustrated in the drawings and the specification. The exemplary embodiments were chosen and described in order to explain certain principles of the invention and their practical application, to thereby enable others skilled in the art to make and utilize various exemplary embodiments of the present invention, as well as various alternatives and modifications thereof. As is evident from the foregoing description, certain aspects of the present invention are not limited by the particular details of the examples illustrated herein, and it is therefore contemplated that other modifications and applications, or equivalents thereof, will occur to those skilled in the art. Many changes, modifications, variations and other uses and applications of the present construction will, however, become apparent to those skilled in the art after considering the specification and the accompanying drawings. All such changes, modifications, variations and other uses and applications which do not depart from the spirit and scope of the invention are deemed to be covered by the invention which is limited only by the claims which follow.

### [Description of Reference Numerals]

10: First support device
11: Support frame
111: First support plate
112: Second support plate
113: Coupling groove
12: Pulley
121: Serration hole
122: Protruding portion
123: Insertion groove
124: Accommodation portion
124a: Insertion hole
20: Second support device
30: Lower rail
31: Support portion
34: Locking hole
40: Upper rail
41: First assembly groove
42: Second assembly groove
43: Third assembly groove
44: Locking hole
51: First cover
511: Catching portion
52: Second cover
521: Insertion protrusion
60: Center shaft
61: Fitting groove
62: One end
63: The other end
70: Coupling member
81: First elastic member
811: First hook portion
812: Second hook portion
82: Second elastic member
821: Elastic portion
B: Belt
BS: Bushing
L: Locking device
L1: Locking protrusion
M: Motor
SB: Serration bar
SF: Seat frame

## Claims

1. A long rail apparatus for a vehicle seat, the long rail apparatus comprising:
a first support device configured to support belts coupled to upper rails at a position forward of lower rails in a longitudinal direction;
a second support device structurally identical to the first support device and configured to support belts coupled to the upper rails at a position rearward of the lower rails in the longitudinal direction; and
a motor configured to pull the belts disposed adjacent to the first support device to enable the upper rails positioned between the first support device and the second support device to move along the lower rails.

2. The long rail apparatus of claim 1,
wherein the lower rails include a first lower rail and a second lower rail positioned opposite to each other,
wherein each of the first support device and the second support device comprises:
a support frame having a first end and a second end positioned opposite to each other, the first end being coupled to the first lower rail, the second end being coupled to the second lower rail;
a first support plate and a second support plate disposed at the first end of the support frame;
a third support plate and a fourth support plate disposed at the second end of the support frame; and
a first pulley and a second pulley, the first pulley being rotatable between the first support plate and the second support plate, the second pulley being rotatable between the third support plate and the fourth support plate, the first pulley and the second pulley being configured to wind or unwind the belts coupled to outer diameter portions of the first pulley and second pulley, each of the first pulley and the second pulley having one end elastically supported by a first elastic member, wherein, optionally, the first elastic member is a spiral spring.

3. The long rail apparatus of claim 2,
wherein the first support plate of the first support device is disposed opposite to the second support plate of the first support device and directed toward the motor, and
wherein the third support plate of the first support device is disposed opposite to the fourth support plate of the first support device and directed toward the motor.

4. The long rail apparatus of claim 2 or 3, further comprising:
a serration bar coupled to the motor,
wherein two opposite ends of the serration bar penetrate the first support plate and the third support plate of the first support device, respectively, and are inserted into serration holes of the first pulley and the second pulley, respectively.

5. The long rail apparatus of anyone of claims 2-4, wherein the motor is surrounded by a first cover, and the first cover is coupled to the support frame of the first support device by a coupling member.

6. The long rail apparatus of claim 5, wherein a catching portion is disposed on one of the first cover and the support frame of the first support device, and a coupling groove, to which the catching portion is coupled, is defined in the other of the first cover and the support frame of the first support device.

7. The long rail apparatus of anyone of claims 2-6,
wherein a second cover is coupled to each of the first pulley and the second pulley,
wherein protruding portions are disposed around one end of each of the first pulley and the second pulley, insertion grooves are defined between the protruding portions, and insertion protrusions disposed inside the second cover are coupled to the insertion grooves.

8. The long rail apparatus of claim 7,
wherein the second cover includes a center shaft penetrating the second cover and positioned inside the second cover,
wherein the first elastic member comprises:
a first hook portion disposed at one end of the first elastic member and fitted with a fitting groove defined at one end of the center shaft; and
a second hook portion disposed at another end of the first elastic member and caught by one of the protruding portions.

9. The long rail apparatus of claim 8, wherein the one end of the center shaft is inserted into an insertion hole defined in an accommodation portion positioned inside the protruding portions of each of the first pulley and the second pulley, and another end of the center shaft penetrates the second cover and is coupled to each of the second support plate and the fourth support plate.

10. The long rail apparatus of claim 9, wherein one surface of the first elastic member is disposed in the accommodation portion, and another surface of the first elastic member is disposed inside the insertion protrusions of the second cover.

11. The long rail apparatus of anyone of claims 2-10, wherein bushings are coupled to the first support plate, the second support plate, the third support plate, and the fourth support plate.

12. The long rail apparatus of anyone of claims 2-11,
wherein a support portion is disposed on each of the lower rails,
wherein an upper surface of each of the belts is supported inside each of the lower rails by the support portion.

13. The long rail apparatus of anyone of claims 2-12,
wherein one end of each of the belts is coupled to each of the first pulley and the second pulley, and another end of each of the belts is inserted into an assembly groove of each of the upper rails, the another end being coupled to each of the upper rails in a state in which a second elastic member is coupled to the another end.

14. The long rail apparatus of claim 13,
wherein the assembly groove comprises:
a first assembly groove configured to receive the another end of each of the belts;
a second assembly groove connected to the first assembly groove and being larger than the first assembly groove; and
a third assembly groove connected to the second assembly groove and being smaller than the second assembly groove.

15. The long rail apparatus of claim 14,
wherein the second elastic member is coupled to the another end of each of the belts,
wherein elastic portions are disposed at two opposite ends of the second elastic member,
wherein the elastic portions are configured to move along the first assembly groove in a state in which the elastic portions are folded toward each of the belts, and
wherein when the elastic portions are inserted into the second assembly groove, the elastic portions are configured to be caught by the second assembly groove while being unfolded upward and downward, respectively, in the second assembly groove.
